# EUROPEAN PATENT APPLICATION

(11) **EP 1 748 287 A1**
(43) Date of publication of application: **31.01.2007**
(21) Application number: 05739119.5
(22) Date of filing: 12.05.2005
(51) Int. Cl.: G01H 11/06, G01P 15/125, H04R 19/01

(54) **VIBRATION SESOR**

(30) Priority: 18.05.2004 JP 2004147987
(71) Applicant: HOSIDEN CORPORATION, Yao-shi, Osaka 581-0071 (JP)
(72) Inventor: YASUDA, Mamoru, Yao-shi, Osaka 5810071 (JP); SUGIMORI, Yasuo, Yao-shi, Osaka 5810071 (JP)
(74) Representative: Kaiser, Magnus
(86) International application number: PCT/JP2005/008703
(87) International publication number: WO 2005/111555

(57) **Abstract**

The invention provides a vibration sensor with improved shock resistance not to lower sensitivity. The vibration sensor comprises a fixed electrode, and a diaphragm 3 having a surface opposed to the fixed electrode and acting as a diaphragm electrode, and a weight 1 attached to a surface facing away from the diaphragm electrode, for outputting vibration detection signals based on variations of capacitance between the fixed electrode and the diaphragm 3, and has the following characteristic features. The diaphragm 3 is divided by a plurality of slits 11 to form a diaphragm section 33 positioned adjacent a central portion thereof and having the weight 1, a fixed section 31 positioned adjacent a peripheral portion thereof for fixing the diaphragm 3, and a plurality of resilient supporting sections 32 formed equidistantly in a circumferential direction for connecting the diaphragm section 33 to the fixed section 31, each of the resilient supporting sections having a narrow intermediate portion 32c. Further, the plurality of slits 11 are formed equidistantly along the circumferential direction such that an end of each slit positioned close to the diaphragm section 33 radially overlaps an end of an adjacent slit positioned close to the fixed section 31.

## Description

### TECHNICAL FIELD

The present invention relates to a vibration sensor comprising a fixed electrode, and a diaphragm having a surface opposed to the fixed electrode and acting as a diaphragm electrode, and a weight attached to a surface facing away from the diaphragm electrode, for outputting vibration detection signals based on variations of capacitance between the fixed electrode and the diaphragm.

### BACKGROUND ART

A vibration sensor of the capacitance detection type, i.e. of the electret condenser microphone type (referred to as "ECM" hereinafter) is in wide use for a microphone, a pedometer, and so on. Patent Document 1 noted below discloses a technique for an ear microphone for detecting bone conduction vibrations. This document shows a method of enhancing sensitivity by attaching a weight to a movable electrode (corresponding to the diaphragm) to substantially increase the mass of the movable electrode thereby to increase the amplitude of the movable electrode in order to detect satisfactorily fine vibrations such as bone conduction vibrations. A further method is shown for improving frequency properties by providing a flake-like movable electrode that is fixed at one end thereof or provided with slits in the form of annual rings in order to improve the ability to trace high-frequency vibrations.

Further, Patent Document 2 noted below provides a construction including impact applying means and a movable electrode vibrated by impacts applied by the impact applying means and having a weight attached thereto in order to satisfactorily detect vibrations in the range of low-vibration (frequency) typically in time of walking. More particularly, the impact applying means transmits vibrations in a low-frequency range to the movable electrode while the electrode has high specific vibrations compared with vibrations to be detected, thereby to satisfactorily detect vibrations in the low-frequency range, typically in time of walking.

Further, Patent Document 3 noted below discloses a technique relating an acceleration sensor of the capacitance detection type for detecting acceleration by converting variations of the acceleration to the capacity of a capacitor. According to this technique, an amount of displacement of a movable electrode is increased by providing a resilient element consisting of a plurality of beams between the movable electrode and outer peripheries for fixedly supporting the movable electrode.
Patent Document 1: Patent Publication No. 59-79700 (Figs. 2 to 3 and Fig. 6; page 1 to page 2, upper paragraphs; page 3, lower left paragraphs)
Patent Document 2: Patent Publication No. 10-9944 (Fig. 1, paragraph 0006 to 0019)
Patent Document 3: Patent Publication No. 8-240609 (Fig. 1; Fig. 6; pages 2 to 3)

### DISCLOSURE OF THE INVENTION

### PROBLEM TO BE SOLVED BY THE INVENTION

The above-noted construction makes it possible to increase inertial force thereby to increase the sensitivity of the sensor. However, shock resistance in time of dropping will be impaired as inertial force is increased to increase amplitude as well. In other words, it increases a possibility that the diaphragm is damaged or deformed by a shock. As a countermeasure, it is proposed to provide a restricting member for limiting an excessive displacement of the weight. In this case, however, the restricting effect is not sufficiently achieved unless a narrow gap is defined between the weight and the restricting member, which allows the diaphragm to be damaged or deformed. If the gap is too narrow, the necessary amplitude will be restricted also, and thus the gap needs to be formed with high accuracy. Thus, the problem remains that high accuracy is required in assembling the product, which results in a decreased assembling efficiency and increased variations in performance of the product due to assembly errors, for example.

In the case of the arrangement shown in Fig. 6 of Patent Document 3, specifically, very advantageous beams are provided in order to obtain a resilient force. However, these beams 8 have the same width (the reference numbers used hereinafter in this paragraph correspond to those in the Document 3). Consequently, a joint section between a movable electrode 1 or a fixed portion 11 and the beams 8 is highly likely to break when an excessive shock is applied such as in time of dropping. In addition, the movable electrode 1 is easily displaced to easily damage or deform the beams 8 when a shock is applied in a plane direction of the movable electrode 1.

The present invention has been made having regard to the above-noted problem, and its object is to provide a vibration sensor for not lowering the sensitivity for detecting vibrations and yet improving shock resistance.

### MEANS FOR SOLVING THE PROBLEM

In order to achieve the above-noted object, a characteristic feature of the present invention lies in a vibration sensor comprising a fixed electrode, and a diaphragm having a surface opposed to the fixed electrode and acting as a diaphragm electrode, and a weight attached to a surface facing away from the diaphragm electrode, for outputting vibration detection signals based on variations of capacitance between the fixed electrode and the diaphragm, wherein said diaphragm is divided by a plurality of slits to form a diaphragm section positioned adjacent a central portion thereof and having the weight, a fixed section positioned adjacent a peripheral portion thereof for fixing the diaphragm, and a plurality of resilient supporting sections formed equidistantly in a circumferential direction for connecting the diaphragm section to the fixed section, each of the resilient supporting sections having a narrow intermediate portion, and wherein the plurality of slits are formed equidistantly along the circumferential direction such that an end of each slit positioned close to the diaphragm section radially overlaps an end of an adjacent slit positioned close to the fixed section.

With this arrangement, the resilient supporting sections have the intermediate portions narrower than the opposite end portions thereof, which can enhance resiliency and achieve sufficient amplitude to improve the sensitivity of the vibration sensor as well as providing the construction in which the opposite end portions are strong against damage or deformation even when a shock is applied. More particularly, so-called root portions of the resilient supporting sections are made large, thereby to enhance the strength of the root portions of the spring where stress tends to concentrate. On the other hand, the resilient supporting sections have the narrow intermediate portions where there is no fear of stress concentration, thereby to disperse the stress tending to concentrate on the root portions of the spring to the entire springs (entire resilient supporting sections).

In the vibration sensor according to the present invention, it is preferable that each of the slits includes an outer path positioned adjacent the fixed section, an inner path positioned adjacent the diaphragm section, and a generally S-shaped connecting path for connecting the outer path to the inner path.

With this arrangement of the slits, each resilient supporting section may be formed in the portion between the outer path and the inner path radially overlapping each other. The resilient supporting section has the one end defined between an end portion of the outer path and the inner path, and the other end defined between an end portion of the inner path and the outer path. Both the opposite ends of the resilient supporting section are formed in portions where the generally S-shaped connecting path extends. Further, the resilient supporting section has the intermediate portion narrower than the opposite ends thereof. This can achieve sufficient amplitude and provide the construction that is strong against damage or deformation when a shock is applied.

Further, in the vibration sensor according to the present invention, each of the slits may be formed as a spiral path extending from the fixed section toward the center of the diaphragm section.

The spiral path has a curvature which becomes larger toward the center of the diaphragm (the radius of curvature becomes smaller) and becomes smaller toward the peripheries of the diaphragm (the radius of curvature becomes larger). In other words, the slit formed by the spiral path has the end thereof adjacent the diaphragm section lying inward as it extends toward the center of the diaphragm while the other end thereof adjacent the fixed section spreads outward as it extends toward the peripheries of the diaphragm. Consequently, the intermediate portion of each resilient supporting section has a smaller width than the end portion adjacent the diaphragm section or the end portion adjacent the fixed section of each resilient supporting section formed between the end portion positioned close to the diaphragm section or the end portion positioned close to the fixed section of each slit and an adjacent slit. Also, the slits are formed by a series of curved paths in this arrangement, which can provide increased strength against distortion caused by a shock applied in the direction of the plane of the diaphragm. As a result, sufficient amplitude can be obtained and sensitivity can be enhanced, and further the construction can be strong against damage and deformation when a shock is applied.

Further, in the vibration sensor according to the present invention, each of the slits includes an outer path positioned adjacent the fixed section, an inner path positioned adjacent the diaphragm section, and a connecting path extending in a radial direction for connecting the outer path to the inner path in a hook-like shape.

With this arrangement, since the outer path and the inner path are connected to each other through the radially extending path to have the hook-like shape, the outer and inner paths may be formed as arcs having different radii, for example. Thus, the shape of the slit may be easily designed and the resiliency and the strength of the resilient supporting section may be readily calculated.

With the above-noted construction, it is preferable that the diaphragm is made of either one of stainless steel, tungsten, 42-alloy, Ti-Cu alloy, Be-Cu alloy and SK material.

Stainless steel, tungsten, 42-alloy and the like are easily available and have excellent processability, and the use of such materials can provide the diaphragm where satisfactory amplitude is obtained. The use of Ti-Cu alloy, Be-Cu alloy, SK material and the like can further enhance the strength to improve the resistance to a shock of dropping. As a result, the vibration sensor can be realized which achieves sufficient amplitude for improved sensitivity and is strong against damage or deformation when a shock is applied.

### BEST MODE FOR CARRYING OUT THE INVENTION

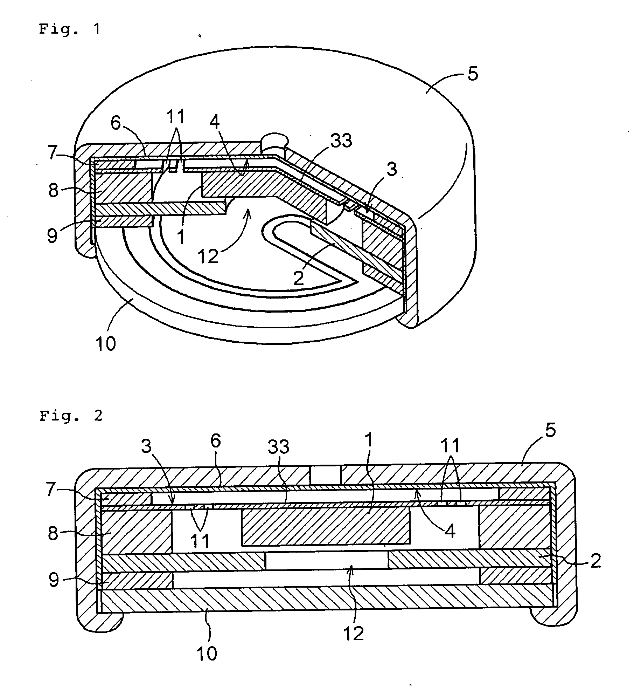

An embodiment of the present invention will be described hereinafter with reference to the drawings. Fig. 1 is a perspective view showing an example of vibration sensor according to the present invention, and Fig. 2 is a sectional view of the vibration sensor shown in Fig. 1. As shown in Figs. 1 and 2, the vibration sensor according to one embodiment of the present invention comprises a fixed electrode 4 having an electret layer 6 formed on an inner surface of a housing 5, and a diaphragm 3 having a surface opposed to the fixed electrode 4 to act as a diaphragm electrode and a surface facing away from the diaphragm electrode and having a weight 1 attached thereto. The weight 1 is displaceable in a direction perpendicular to the plane of the diaphragm 3 to output vibration detection signals based on variations of capacitance between the fixed electrode 4 and the diaphragm 3. The sensor further comprises a restricting plate (restricting member) 2 for contacting the weight 1 to limit an amount of displacement of the weight.

The above-noted fixed electrode 4 is provided by a bottom portion of the cylindrical housing 5 having an open end, with the electret layer 6 formed on the inner surface thereof. An annular spacer 7 formed of resin and the diaphragm 3 are attached to the bottom, and the thickness of the spacer 7 defines a predetermined gap of a capacitor section for detecting variations of capacitance. The weight 1 is attached to the diaphragm 3, and successively stacked thereon are a restricting ring 8 for limiting displacement of the weight 1 in a direction parallel to the plane of the diaphragm 3 (referred to as "horizontal direction" hereinafter), the restricting plate 2 for limiting displacement of the weight 1 in a direction perpendicular to the plane of the diaphragm 3 (referred to as "vertical direction" hereinafter), and a gate ring 9. Then, a substrate 10 having an output circuit mounted thereon for vibration detection signals is placed as a cover and secured to the housing 5, to complete assembly of the vibration sensor. In this arrangement, the diaphragm 3 is fixedly supported and held at peripheries thereof between the spacer 7 and the restricting ring 8. The housing 5, restricting ring 8 and gate ring 9 are made of metal. It should be noted that the restricting ring 8 acts also as a raising ring for forming a gap that allows sufficient amplitude for the weight 1 displaceable in the direction perpendicular to the plane of the diaphragm 3. The restricting plate 2 has an aperture 12 for the air present between the restricting plate 2 and the weight 1 to be discharged effectively when the weight 1 is displaced in the vertical direction.

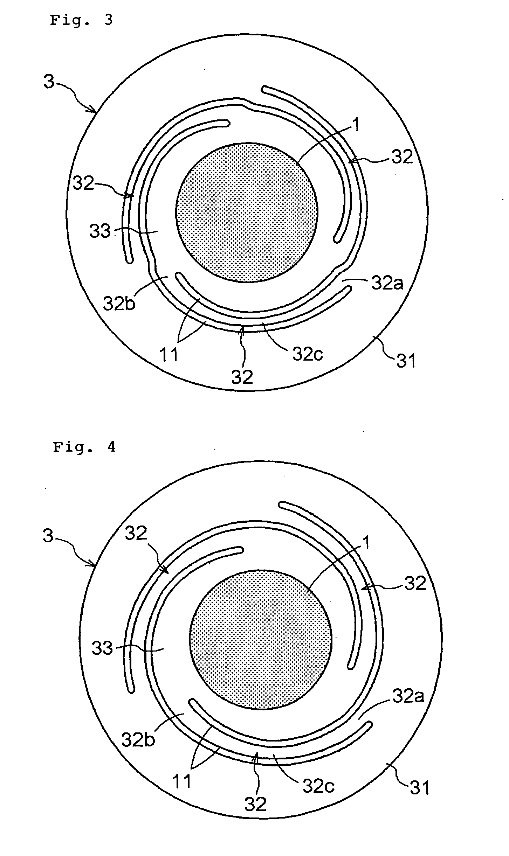

Fig. 3 shows an example of dividing the diaphragm of the vibration sensor according to the present invention. As shown in Fig. 3, the diaphragm 3 is divided by a plurality of slits 11 into a diaphragm section 33 positioned in a central portion thereof and having the weight 1 attached thereto, a fixed section 31 positioned in the peripheries for fixing the diaphragm 3, and a resilient supporting sections 32 connecting the diaphragm section 33 to the fixed section 31. Each resilient supporting section 32 is in the form of a beam-like member including one end 32a defining a boundary with the fixed section 31, the other end 32b defining a boundary with the diaphragm section 33, and an intermediate portion 32c between the opposite ends and having a smaller width than these ends. The plurality of resilient supporting sections 32 are formed equidistantly in a circumferential direction by forming the respective slits as arranged equidistantly along the circumferential direction and each extending continously from the fixed section 31 toward the diaphragm section 33 such that the portion positioned close to the fixed section of one slit radially overlaps the portion positioned close to the diaphragm section of an adjacent slit.

Such an arrangement of the resilient supporting sections 32 may improve sensitivity with the diaphragm 3 having sufficient amplitude, and provide a construction strong against damage and deformation when a shock is applied. The amplitude of the diaphragm 3, i.e. the amplitude of the diaphragm section 33, is provided by resiliency of the intermediate portions 32c of the beam-like resilient supporting sections 32. Thus, each resilient supporting section preferably has a long and narrow shape in order to maximize the resiliency effect. On the other hand, the end portions 32a and 32b of each resilient supporting section 32 defining boundaries with the fixed section 31 or the diaphragm section 33 preferably maintains some strength since they act as support points for the resilient supporting sections 32 in resilient motion. This should be done in order to lessen the chance of damage such as cracks caused by vibrations and deformation caused by torsion. To this end, the resilient supporting sections 32 are narrowed in the central portions thereof so that the intermediate portions 32c of the resilient supporting sections 32 bear much of the deformation. More particularly, the resilient supporting sections 32 are slit-shaped to have the intermediate portions 32c narrower than the opposite end portions 32a and 32b so that the diaphragm 3 may have an excellent resiliency effect, enhanced strength and a satisfactory amplitude over an extended period of time.

Further, since the three resilient supporting sections 32 are circumferentially arranged in this embodiment, the diaphragm section 33 is not likely to oscillate excessively about a diameter of the diaphragm 3 even when the vibrating direction of the weight 1 is oblique to the direction perpendicular to the plane of the diaphragm 3. For example, if the vibration sensor of this embodiment is dropped and a side wall portion of the cylindrical housing 5 or a corner portion forming a joint portion between the housing 5 and the substrate 10 hits the ground or the like, the sensor receives a shock from a direction oblique to the direction perpendicular to the plane of the diaphragm 3. As a result, the weight 1 attached to the diaphragm 3 vibrates obliquely to the direction perpendicular to the plane of the diaphragm 3. If the arrangement of the resilient supporting sections 32 were in line symmetry with respect to a diameter of the diaphragm 3, the diaphragm section 33 would excessively oscillate about the diameter perpendicular to the direction of the shock applied to the vibration sensor.

However, in this embodiment, the three resilient supporting sections 32 are circumferentially arranged and thus not arranged in line symmetry with respect to a diameter of the diaphragm 3. Therefore, each of the resilient supporting sections 32 arranged asymmetrically with respect to a diameter of the diaphragm 3 acts against oscillation about a diameter of the diaphragm 3. As a result, it is possible to reliably prevent the diaphragm 3 from being damaged or deformed. More particularly, as shown in Fig. 3, three or a larger, odd number of slits 11 are provided to form three or the larger odd number of resilient supporting sections 32, which can obtain sufficient amplitude for enhancing the sensitivity of the vibration sensor and realize the shock-resistant diaphragm 3.

Fig. 3 shows that each slit 11 is formed of an outer path positioned adjacent the fixed section 31, an inner path position adjacent the diaphragm section 3, and a generally S-shaped connecting path for connecting the outer path to the inner path. However, the shape of the slit 11 is not limited to such, but may be a spiral path extending from the fixed section 31 to the diaphragm section 33 as shown in Fig. 4. The spiral path has a curvature which becomes larger toward the center of the diaphragm (the radius of curvature becomes smaller) and becomes smaller toward the peripheries of the diaphragm (the radius of curvature becomes larger). In other words, the slit 11 formed by the spiral path has the end thereof adjacent the diaphragm section 33 lying inward as it extends toward the center of the diaphragm while the other end thereof adjacent the fixed section 31 spreads outward as it extends toward the peripheries of the diaphragm. Consequently, the intermediate portion 32c of each resilient supporting section 32 has a smaller width than the end portion 32b adjacent the diaphragm section or the end portion 32a adjacent the fixed section of each resilient supporting section 32 formed between the end portion positioned close to the diaphragm section or the end portion positioned close to the fixed section of each slit and an adjacent slit. Also, the slits 11 are formed by a series of curved paths in this arrangement, which can provide increased strength against distortion caused by a shock applied in the direction of the plane of the diaphragm 3. As a result, sufficient amplitude can be obtained and sensitivity can be enhanced, and further the construction can be strong against damage and deformation when a shock is applied.

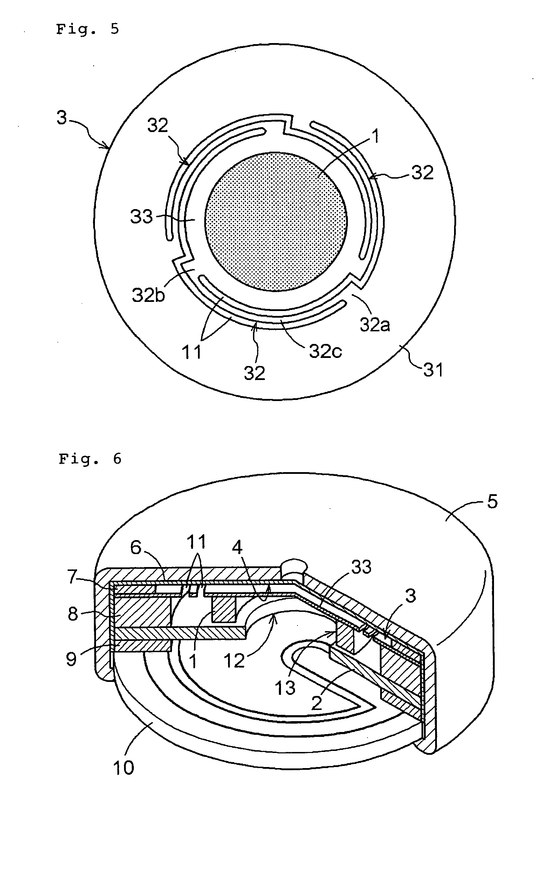

Further, as shown in Fig. 5, each slit 11 may consist of an outer path positioned adjacent the fixed section 31, an inner path positioned adjacent the diaphragm section 33, and a connecting path extending in a radial direction for connecting the outer path to the inner path in a hook-like shape. With this arrangement, since the outer path and the inner path are connected to each other through the radially extending path to have the hook-like shape, the outer and inner paths may be formed as arcs having different radii, for example. Thus, the shape of the slit may be easily designed and the resiliency and the strength of the resilient supporting section may be readily calculated.

The above-noted diaphragm 3 may be made of stainless steel, tungsten, 42-alloy, Ti-Cu, Be-Cu, SK material or the like. Where the resistance to a shock of dropping is not required, any one of the above metal materials may be employed as long as amplitude is obtained. On the other hand, where the resistance to a shock of dropping is strongly required, harder materials such as Ti-Cu, Be-Cu, SK material or the like may be used. Since the use of such materials reduces vibration of the diaphragm 3 in the plane direction, the restricting ring 8 for limiting such vibration will be dedicated to the functions of a raising ring. As a result, the restricting ring 8 can be radially thinner to realize a cost reduction and a weight reduction of the vibration sensor.

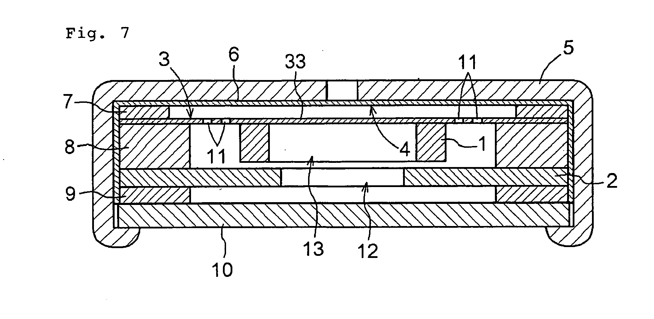

It should be noted that the weight 1 may be ring-shaped having an aperture 13 formed in the central portion thereof, as shown in Figs. 6 and 7. In that case, the weight 1 may be attached to a radially larger area of the diaphragm 3 than the cylindrical weight 1 having the same mass, for example. As a result, the weight 1 will contact the restricting plate 2 at a furhter radially outward portion when displaced with excessive oscillation about the diameter of the diaphragm 3, which can reduce the oscillating angle of the diaphragm 3. Consequently, an excessive displacement of the weight 1 may be advantageously restrained to prevent the diaphragm 3 from being damaged or deformed.

Thus, the present invention can provide a vibration sensor in which shock resistance is enhanced and yet sensitivity is not lowered.

### INDUSTRIAL UTILITY

The present invention may be used in a vibration sensor for detecting vibrations, an acceleration sensor for detecting acceleration, and a vibration detecting device, an acceleration detecting device, a pedometer or the like incorporating the above-noted sensors.

### BRIEF DESCRIPTION OF THE DRAWINGS

[Fig. 1] Perspective view of an example of vibration sensor according to the present invention.
[Fig. 2] Sectional view of the example of vibration sensor according to the present invention.
[Fig. 3] View showing a first example of dividing a diaphragm of the vibration sensor according to the present invention.
[Fig. 4] View showing a second example of dividing the diaphragm of the vibration sensor according to the present invention.
[Fig. 5] View showing a third example of dividing the diaphragm of the vibration sensor according to the present invention.
[Fig. 6] Perspective view of an alternative embodiment of the vibration sensor according to the present invention.
[Fig. 7] Perspective view of a further alternative embodiment of the vibration sensor according to the present invention.

### DESCRIPTION OF THE REFERENCE NUMERALS

- 1: weight
- 3: diaphragm (31: fixed section, 32: resilient supporting portion (32c: intermediate portion), 33: diaphragm section)
- 11: slits

## Claims

1. A vibration sensor comprising a fixed electrode, and a diaphragm having a surface opposed to the fixed electrode and acting as a diaphragm electrode, and a weight attached to a surface facing away from the diaphragm electrode, for outputting vibration detection signals based on variations of capacitance between the fixed electrode and the diaphragm,
wherein said diaphragm is divided by a plurality of slits to form
a diaphragm section positioned adjacent a central portion thereof and having the weight,
a fixed section positioned adjacent a peripheral portion thereof for fixing the diaphragm, and
a plurality of resilient supporting sections formed equidistantly in a circumferential direction for connecting the diaphragm section to the fixed section, each of the resilient supporting sections having a narrow intermediate portion, and
wherein the plurality of slits are formed equidistantly along the circumferential direction such that an end of each slit positioned close to the diaphragm section radially overlaps an end of an adjacent slit positioned close to the fixed section.

2. A vibration sensor as claimed in Claim 1, wherein each of the slits includes
an outer path positioned adjacent the fixed section,
an inner path positioned adjacent the diaphragm section, and
a generally S-shaped connecting path for connecting the outer path to the inner path.

3. A vibration sensor as claimed in Claim 1, wherein each of the slits is formed as a spiral path extending from the fixed section toward the center of the diaphragm section.

4. A vibration sensor as claimed in Claim 1, wherein each of the slits includes
an outer path positioned adjacent the fixed section,
an inner path positioned adjacent the diaphragm section, and
a connecting path extending in a radial direction for connecting the outer path to the inner path in a hook-like shape.

5. A vibration sensor as claimed in any one of Claims 1 to 4, wherein the diaphragm is made of either one of stainless steel, tungsten, 42-alloy, Ti-Cu alloy, Be-Cu alloy and SK material.
